# EUROPÄISCHE PATENTANMELDUNG

(11) **EP 1 505 469 A1**
(43) Veröffentlichungstag der Anmeldung: **09.02.2005**
(21) Anmeldenummer: 03028026.7
(22) Anmeldetag: 06.12.2003
(51) Int. Cl.: G06F 1/00

(54) **Verfahren zur Sicherung von Computerprogrammen gegen unbefugte Mehrfachnutzung**

(30) Priorität: 06.08.2003 DE 10336083
(71) Anmelder: Siemens Aktiengesellschaft, 80333 München (DE)
(72) Erfinder: Bobonko, Pavol, 07101 Michalovce (SK); Zukrigl, Elisabeth, 1210 Wien (AT)
(74) Vertreter: Berg, Peter, Dipl.-Ing.

(57) **Zusammenfassung**

Die Erfindung betrifft ein Verfahren zur Sicherung von interpretierten Computerprogrammen gegen unbefugte Mehrfachnutzung, bei dem die Computerprogramme mit kryptografischen Verfahren verschlüsselt werden, dadurch gekennzeichnet, dass ein wesentlicher Teil der für die Entschlüsselung der Computerprogramme erforderlichen kryptografischen Verfahren als Bestandteil des Interpreterprogrammes ausgeführt wird.

Die Erfindung ist besonders bedeutsam für Programme, die in der Programmiersprache JAVA erstellt worden sind, und bietet für diese Programme einen wirksamen Schutz gegen unbefugte Mehrfachnutzung

## Beschreibung

Die Erfindung betrifft ein Verfahren zur Sicherung von interpretierten Computerprogrammen gegen unbefugte Mehrfachnutzung, bei dem die Computerprogramme mit kryptografischen Verfahren verschlüsselt werden.

Die Verschlüsselung von Computerprogrammen (Software) ist eine übliche Vorgehensweise zum Schutz gegen unbefugte Nutzung. Eine Schwachstelle der bekannten Verfahren ist die Tatsache, dass neben der verschlüsselten Software auch der zur Dekodierung notwendige Schlüssel in einer geeigneten Form mitgeliefert werden muss. Dies wird für Programme als unproblematisch erachtet, die in Form eines Maschinencodes, also einer von einem Computer unmittelbar als Befehlsfolge verstandenen binären Zahlenfolge ausgeliefert werden, da in diesem Fall die Analyse des Programmes und damit die Ermittlung des Schlüssels mit vertretbarem Aufwand nicht durchführbar ist.

Problematisch ist die Auslieferung des Schlüssels allerdings bei Programmen, die mittels sogenanntem Interpreter ausgeführt werden, bei denen das Programm aus der Programmiersprache oder einem gegebenenfalls erstellten Zwischencode erst während des Ablaufs auf einem Zielrechner schrittweise in den ausführbaren Maschinencode übersetzt und der übersetzte Befehl noch vor dem Übersetzen des nächsten Befehles ausgeführt wird.

In diesen Fällen muss der Schlüssel in der für den Fachmann leicht lesbaren Programmiersprache oder einem ebenfalls leicht lesbaren Zwischencode übergeben werden, er kann daher auf vergleichsweise einfache Weise ausgeforscht und die Verschlüsselung damit umgangen werden.

Der Erfindung liegt daher die Aufgabe zugrunde, bei interpretierten Computerprogrammen die Verschlüsselung zu verbessern und damit den Schutz gegen unbefugte Nutzung zu erhöhen.

Diese Aufgabe wird erfindungsgemäß gelöst mit einem Verfahren der eingangs genannten Art bei dem ein wesentlicher Teil der für die Entschlüsselung der Computerprogramme erforderlichen kryptografischen Verfahren als Bestandteil des Interpreterprogrammes ausgeführt wird.

Durch die Einbindung in den Interpreter, der vorteilhafterweise in der C++ Programmiersprache erstellt, in Maschinencode compiliert und in dieser Form ausgeliefert wird, ist die Ausforschung dieser Programmteile sehr erschwert und entspricht üblichen Sicherheitsanforderungen.

Das Verfahren ist besonders vorteilhaft für interpretierbare Computerprogramme einsetzbar, welche in der Programmiersprache JAVA ausgeführt sind. Java ist eine Programmiersprache, die besonders für den Einsatz in vernetzten Systemen entwickelt worden ist und daher insbesondere für Internet-Applikationen Bedeutung erlangt hat.

Als Verschlüsselungsverfahren sind vorteilhafterweise symmetrische Verfahren wie das sogenannte "Blowfish"verfahren anwendbar. Besonders geeignet sind dabei Blockchiffren, bei denen die Kodierung und Dekodierung der Daten blockweise, beispielsweise in 64 bit Blöcken erfolgt.

Zur Sicherung des Programmes ist es oftmals ausreichend, wenn nur sicherheitsrelevante Programmteile verschlüsselt werden. Damit kann die Interpretation des Programmes beschleunigt werden.

Die Erfindung wird anhand eines in der Fig. schematisch dargestellten Ausführungsbeispieles näher erläutert.

Das beispielhafte Schema stellt den erfindungsgemäßen Schutz eines JAVA-Programmes dar.

Es handelt sich dabei typisch um eine der folgenden zwei Klassen von Programmen:
Applications, das sind vollständige JAVA-Programme, die alle zu ihrer Ausführung notwendigen Bestandteile, insbesondere Klassen enthalten, und
Applets: kleinere Anwendungen, die bei dem Client oder Zielrechner, auf dem sie laufen sollen, bestimmte Klassen von Software bereits voraussetzen.

JAVA ist speziell für die Nutzung von in Computernetzen und in den entsprechenden Netzknoten verteilten Ressourcen entwickelt worden. Sie ist daher besonders für Client/Server - Systeme und dort insbesondere für die auf den Clients laufenden Anwendungen geeignet. Dieser Anwendungsbereich macht aber einen wirkungsvollen Schutz gegen unbefugte Verwendung dieser Programme besonders bedeutsam.

Erfindungsgemäß wird nun eine bestimmte Applikation, d.h. ein JAVA-Programm durch einen Software-Produzenten S erstellt und mittels Compiler in einen plattformunabhängigen Bytecode oder P-Code JC umgewandelt. Dieser Code ist für einen Fachmann ähnlich leicht zu analysieren, wie der JAVA-Source Code. Das gesamte Programm oder zumindest seine sicherheitsrelevanten Teile werden daher zur Verhinderung unbefugter Nutzung mittels kryptografischen Verfahren EP in eine verschlüsselte Form umgewandelt.

Der Bytecode - verschlüsselt oder unverschlüsselt, wird an den Kunden weitergegeben, bzw. auf das von ihm betriebene Rechnersystem JA übertragen und dort als verschlüsselter Bytecode JCE oder unverschlüsselter Bytecode JCN gespeichert. Bei Internetanwendungen kann die Anwendung auch über das Netz auf einen Client JA geladen werden.

Rechnersystem oder Client JA enthalten den Interpreter JE, der den Bytecode in Maschinencode JO umsetzt. Bei Internetanwendungen ist der Interpreter JE üblicherweise im WWW-Browser des Clients JA enthalten. Dieser Interpreter JE enthält nun erfindungsgemäß auch die für die Decodierung der verschlüsselten Programmteile notwendigen kryptografischen Algorithmen OE d.h. bei einem symmetrischen Verfahren wie dem Blowfish-Verfahren insbesondere den Schlüssel mit einer Länge von 32 bis 448 Bit. Alternativ zu dem genannten Verfahren sind auch andere Verschlüsselungsverfahren wie z.B das Diffie-Hellman Verfahren anwendbar.

Dazu ist es notwendig, dass der Softwareproduzent nicht nur die Applikation selbst, sondern auch einen entsprechenden Interpreter JE, der die Entschlüsselungsalgorithmen OE enthält, an den Kunden übergibt.

Im Gegensatz zur JAVA-Applikation, die aufgrund ihrer Eigenschaft als interpretierbare Software als - leicht lesbarer - Bytecode übergeben werden muss, wird die Interpretersoftware JE in Form eines direkt ausführbaren Maschinencodes an den Kunden C bzw. das Rechnersystem übergeben. Damit ist die Ausforschung des für die Dekodierung notwendigen Schlüssels unter praktischen Bedingungen nahezu unmöglich.

Ein Vorteil der vorzugsweise verwendeten symmetrischen kryptografischen Verfahren ist der vergleichsweise schnelle Ablauf der verwendeten Algorithmen, sodass durch die Codierung keine wesentliche Verzögerung des Interpretervorganges eintritt.

Das Blowfish-Verfahren gehört zur Klasse der sogenannten Blockchiffren, bei denen der Verschlüsselungsalgorithnmus jeweils auf Datenblöcke konstanter Länge, im gegenständlichen Fall mit einer Länge von 64 bit angewendet wird. Damit sind diese Blockchiffren für die Dekodierung der JAVA-Programmbefehle im Rahmen der schrittweisen Ausführung des Programmes durch den Interpreter besonders geeignet.

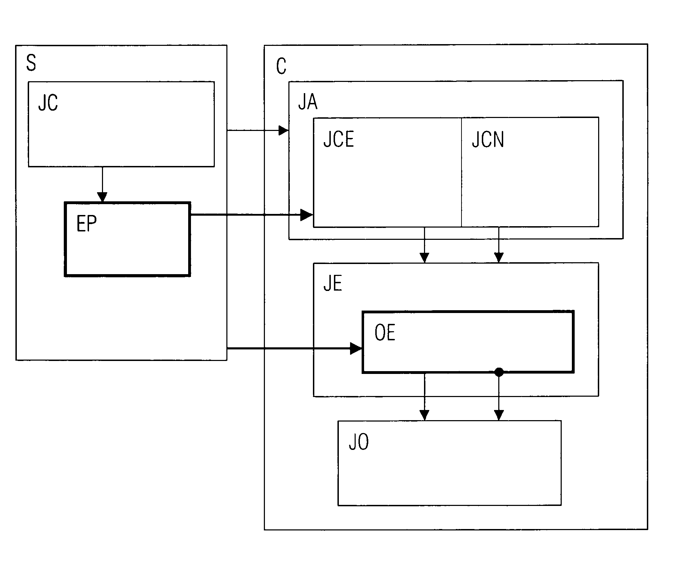

## Patentansprüche

1. Verfahren zur Sicherung von interpretierten Computerprogrammen gegen unbefugte Mehrfachnutzung, bei dem die Computerprogramme mit kryptografischen Verfahren verschlüsselt werden, **dadurch gekennzeichnet, dass** ein wesentlicher Teil der für die Entschlüsselung der Computerprogramme erforderlichen kryptografischen Verfahren (OE)als Bestandteil des Interpreterprogrammes (JE) ausgeführt wird.

2. Verfahren nach Anspruch 1, **dadurch gekennzeichnet, dass** das interpretierte Computerprogramm in der Programmiersprache JAVA ausgeführt ist.

3. Verfahren nach einem der Ansprüche 1 bis 2, **dadurch gekennzeichnet, dass** als Verschlüsselungsverfahren (EP) ein symmetrisches Verfahren angewendet wird, bei dem zur Verschlüsselung und Entschlüsselung der Daten derselbe Schlüssel verwendet wird.

4. Verfahren nach Anspruch 3, **dadurch gekennzeichnet, dass** als Verschlüsselungsverfahren (EP)ein Blockchiffre-Verfahren angewendet wird, bei dem die Verschlüsselungsoperation auf 64bit-Blöcke angewendet wird.

5. Verfahren nach einem der Ansprüche 1 bis 2, **dadurch gekennzeichnet, dass** als Verschlüsselungsverfahren (EP)das "Blowfish"-Verfahren angewendet wird.

6. Verfahren nach einem der Ansprüche 1 bis 5, **dadurch gekennzeichnet, dass** nur ein Teil der zu sichernden Computerprogramme (JCE) verschlüsselt wird.

7. Verfahren nach einem der Ansprüche 1 bis 6, **dadurch gekennzeichnet, dass** das Interpreterprogramm (JE) in der Programmiersprache C++ ausgeführt und in compilierter Form als Maschinencode übergeben wird.
